# EUROPÄISCHE PATENTANMELDUNG

(11) **EP 4 047 316 A1**
(43) Veröffentlichungstag der Anmeldung: **24.08.2022**
(21) Anmeldenummer: 22156899.1
(22) Anmeldetag: 15.02.2022
(51) Int. Cl.: G01C 21/30

(54) **VERFAHREN ZUM BEWERTEN EINER BEKANNTHEIT EINER FAHRSTRECKE UND ELEKTRONISCHE RECHENEINRICHTUNG**

(30) Priorität: 23.02.2021 DE 102021201698
(71) Anmelder: VOLKSWAGEN AG, 38440 Wolfsburg (DE)
(72) Erfinder: Templer, Maximilian, 38122 Braunschweig (DE); Kaste, Jonas, 31061 Alfeld (Leine) (DE); Kabil, Sevsel Gamze, 38102 Braunschweig (DE)

(57) **Zusammenfassung**

Die Erfindung betrifft ein Verfahren zum Bewerten einer Bekanntheit einer Fahrstrecke (26, 32) sowie eine dazu eingerichtete elektronische Recheneinrichtung. In dem Verfahren werden Streckendaten (14) bereitgestellt, die geometrische Eigenschaften (16) einer bekannten Fahrstrecke (10) angeben und in einem durch entsprechende vorgegebene geometrische Parameter aufgespannten Eigenschaftsraum gruppiert sind. Für die zu bewertende Fahrstrecke (26, 32) werden Verlaufsdaten erfasst, die einen Streckenverlauf angeben, und die geometrischen Eigenschaften bestimmt. Weiter wird ein Abstand der geometrischen Eigenschaften der zu bewertenden Fahrstrecke (26, 32) zu den geometrischen Eigenschaften (16) der bekannten Fahrstrecke (10) in dem Eigenschaftsraum bestimmt. Darauf basierend wird die Bekanntheit (38) der zu bewertenden Fahrstrecke (26, 32) angegeben.

## Beschreibung

Die vorliegende Erfindung betrifft ein Verfahren zum Bewerten einer Bekanntheit einer Fahrstrecke für eine Fahrassistenzeinrichtung sowie eine zum Ausführen eines solchen Verfahrens eingerichtete elektronische Recheneinrichtung.

Fahrerassistenzsysteme für Kraftfahrzeuge finden derzeit zunehmende Verbreitung und sollen insbesondere hinsichtlich einer möglichst vollständig autonomen Fahrzeugführung weiterentwickelt werden. Bei der heutzutage verfügbaren Fahrerassistenzsystemen ist jedoch zu beobachten, dass diese nicht in sämtlichen Verkehrssituationen und Umgebungen vollständig zuverlässig und fehlerfrei agieren können. Dies betrifft insbesondere Verkehrssituationen oder Umgebungen, die die dem jeweiligen Fahrassistenzsystem unbekannt sind, für welche dieses also beispielsweise nicht trainiert oder optimiert wurde. Somit besteht also im Sinne der Sicherheit Bedarf für Möglichkeiten, entsprechende Situationen sicher und zuverlässig zu handhaben.

Ein Ansatz zum Steuern autonomer Fahrzeuge ist beispielsweise in der US 2020 / 0 033 869 A1 beschrieben. In dem dortigen Verfahren werden durch Fahragenten Fahrerfahrungen während unterschiedlicher Fahrszenarien in unterschiedlichen Fahrumgebungen erfasst. Von einem Richtlinienserver werden Parameter für Kandidatenrichtlinien an die Fahragenten bereitgestellt, wobei jede Richtlinie eine Verteilung über einen Raum von Aktionen für jeden gegebenen Zustand vorschreibt. In den Fahragenten werden die empfangenen Parameter verarbeitet und wenigstens eine Kandidatenrichtlinie ausgeführt, um wenigstens eine Aktion zu generieren, die das Fahrzeug in einer spezifischen Fahrumgebung wie von einem korrespondierenden Fahrumgebungsprozessor beobachtet steuert. In einem low-Level Controller wird jede dieser Aktionen verarbeitet, um Steuersignale zum Steuern des Fahrzeugs in einem Betrieb in der spezifischen Fahrumgebung zu generieren.

Als weiterer Ansatz ist in der US 9,562,779 B2 ein Verfahren zum Generieren geometrischer Kartendaten für einen Betrieb eines autonomen Fahrzeugs beschrieben. Dabei wird eine Vielzahl von Krümmungsbeispielen gesammelt, wenn Fahrzeuge Reisesegmente überfahren. Darauf basierend wird eine erfahrene Krümmung für die Reisesegmente bestimmt, die einen jeweiligen Fahrpfad der Fahrzeuge durch das Reisesegment angibt. Basierend auf mit den Reisesegmenten assoziierten Straßengeometriedaten wird eine geometriebasierte Krümmung für die Reisesegmente bestimmt. Anschließend werden Unterschiede zwischen der erfahrenen Krümmung und der geometriebasierten Krümmung bestimmt und dem jeweiligen Reisesegment in den geometrischen Kartendaten zugeordnet. Basierend auf diesen geometrischen Kartendaten wird eine manuelle Führung des autonomen Fahrzeugs initiiert oder empfohlen, wenn das autonome Fahrzeug das entsprechende Reisesegment überfährt. Damit soll dem Problem begegnet werden, dass verfügbare geometrische Kartendaten oftmals weder die Sicherheit noch die Zuverlässigkeit von Daten berücksichtigen, die Straßensituationen betreffen.

Es ist Aufgabe der vorliegenden Erfindung, eine objektive Beurteilung von Fahrszenarien zu ermöglichen.

Diese Aufgabe wird erfindungsgemäß durch die Gegenstände der unabhängigen Patentansprüche gelöst. Weitere mögliche Ausgestaltungen der Erfindung sind in den Unteransprüchen, in der Beschreibung und in den Figuren offenbart.

Das erfindungsgemäße Verfahren dient zum Bewerten einer Bekanntheit einer Fahrstrecke für eine Fahrassistenzeinrichtung. Mit anderen Worten kann mittels des Verfahrens angegeben werden, ob die jeweilige zu bewertende Fahrstrecke einer oder mehreren anderen Fahrstrecken, die der Fahrassistenzeinrichtung bereits bekannt sind, ähnlich ist oder nicht. Eine Fahrstrecke kann der Fahrassistenzeinrichtung bekannt sein, wenn die Fahrassistenzeinrichtung beispielsweise anhand dieser Fahrstrecke trainiert oder optimiert wurde oder die Fahrassistenzeinrichtung ihre Aufgabe oder Funktion entlang dieser Fahrstrecke bereits - real oder simuliert - ausgeübt hat, also beispielsweise ein Kraftfahrzeug bereits autonom oder teilautonom bzw. zumindest teilweise automatisiert entlang der jeweiligen Fahrstrecke geführt hat. Ebenso kann eine Fahrstrecke dann als der Fahrassistenzeinrichtung bekannt gelten, wenn eine Performanz der Fahrassistenzeinrichtung entlang dieser Fahrstrecke bereits bestimmt wurde.

Die Performanz der Fahrassistenzeinrichtung kann mittels der vorliegenden Erfindung besonders objektiv bestimmt werden. Beispielsweise kann die Performanz bestimmt oder gemessen werden an vorgegebenen Sicherheits- und/oder Leistungsparametern, wie etwa einer Einhaltung von Verkehrsregeln, erlaubten Geschwindigkeiten, als sicher eingestuften Grenzwerten für Abstände, Geschwindigkeiten, Beschleunigungen, vorgegebenen Komfortgrenzwerten, etwa hinsichtlich einer Abruptheit von Manövern oder einer Rate von Geschwindigkeits- und/oder Richtungswechseln, und/oder dergleichen mehr. Ebenso kann die Performanz in einem Zustandsraum bzw. anhand von Fahrstrecken oder Fahrstreckenabschnitten in einem Zustandsraum evaluiert werden, wobei in dem Zustandsraum etwa geometrische Eigenschaften der Fahrstrecke bzw. der Fahrstreckenabschnitte angegeben sein können. Wie weiter untern näher erläutert wird, kann mittels der vorliegenden Erfindung dann die Performanz der Fahrassistenzeinrichtung auch für der Fahrassistenzeinrichtung bis zu einer ersten Verarbeitung unbekannte Fahrstrecken oder Fahrstreckenabschnitte evaluiert werden. Darüber hinaus kann eine weitere oder andere Metrik zum Bestimmen bzw. Evaluieren, also Bewerten der Performanz verwendet werden. Prinzipiell kann das erfindungsgemäße Verfahren also flexibel angewendet werden.

Die Fahrassistenzeinrichtung kann beispielsweise ein vorgegebenes bzw. trainiertes Modell für die zumindest teilautonome oder teilautomatisierte Fahrzeugführung eines Kraftfahrzeugs sein oder umfassen. Dies kann beispielsweise in Form eines, insbesondere tiefen, also mehrschichtigen, künstlichen neuronalen Netzes oder einer mittels eines Lernalgorithmus gelernten Strategie realisiert werden.

Das erfindungsgemäße Verfahren umfasst mehrere Verfahrensschritte, die mittels einer vorgegebenen, entsprechend eingerichteten elektronischen Recheneinrichtung, insbesondere automatisch, durchgeführt werden.

In einem Verfahrensschritt des erfindungsgemäßen Verfahrens werden Streckendaten bereitgestellt, die geometrische Eigenschaften wenigstens einer der Fahrassistenzeinrichtung bekannten Fahrstrecke, insbesondere die geometrischen Eigenschaften mehrerer der Fahrassistenzeinrichtung bekannter Fahrstrecken, angeben. Diese Streckendaten sind dabei gemäß der geometrischen Eigenschaften in einem durch entsprechende vorgegebene geometrische Parameter aufgespannten Eigenschaftsraum gruppiert, also geclustert. Die geometrischen Eigenschaften können also konkrete Werte der vorgegebenen Parameter für die jeweilige Fahrstrecke sein, also Datenpunkte, Punktewolken oder Punktegruppen in dem Eigenschaftsraum bilden. Die Parameter bzw. die geometrischen Eigenschaften können beispielsweise lokale Kurvenradien oder Krümmungen, Krümmungsrichtungen, Krümmungsänderungen, Fahrbahnbreiten, räumliche Streckenkoordinaten, Abstände einer Trajektorie zu einem Fahrbahnrand und/oder dergleichen mehr sein oder beschreiben. Diese Streckendaten können beispielsweise rechnergestützt für simulierte unbekannte Fahrstrecken bereitgestellt werden und/oder während einer Fahrt eines Messfahrzeugs entlang der Fahrstrecken mittels entsprechender Sensoren aufgenommen werden.

In einem weiteren Verfahrensschritt des erfindungsgemäßen Verfahrens werden für die jeweilige zu bewertende Fahrstrecke Verlaufsdaten erfasst. Diese Verlaufsdaten geben zumindest einen Verlauf der Fahrstrecke an. Für die jeweilige zu bewertende Fahrstrecke werden zudem deren geometrische Eigenschaften, also die entsprechenden Datenpunkte in dem genannten Eigenschaftsraum, analog zu den Streckendaten der wenigstens einen bekannten Fahrstrecke bestimmt. Mit anderen Worten werden also für die jeweilige zu bewertende Fahrstrecke diejenigen Daten oder Eigenschaften bestimmt, die auch für die wenigstens eine bekannte Fahrstrecke bereitgestellt wurden.

In einem weiteren Verfahrensschritt des erfindungsgemäßen Verfahrens wird automatisch ein Abstand der geometrischen Eigenschaften der jeweiligen zu bewertenden Fahrstrecke zu den geometrischen Eigenschaften der wenigstens einen bekannten Fahrstrecke in dem aufgespannten Eigenschaftsraum bestimmt. Es kann dafür ein Abstand zwischen den entsprechenden Datenpunkten im Eigenschaftsraum oder etwa ein Abstand der jeweiligen geometrischen Eigenschaft, also des jeweiligen Datenpunkts zu einem Centroiden, also einem geometrischen Schwer- oder Mittelpunkt von Gruppen oder Clustern der geometrischen Eigenschaften der bekannten Fahrstrecken, bestimmt werden. Dabei kann es sich jeweils etwa um den Centroiden desjenigen Clusters handeln, innerhalb von dessen Grenzen die jeweilige geometrische Eigenschaft, also der jeweilige entsprechende Datenpunkt, der zu bewertenden Fahrstrecke liegt. Ebenso kann der jeweilige Abstand zu dem jeweils nächstliegenden Centroiden bestimmt werden. Je nach Anzahl der für die zu bewertende Fahrstrecke bestimmten geometrischen Eigenschaften können auf diese Weise mehrere einzelne Abstände bestimmt werden. Diese können dann im Folgenden separat oder individuell weiterverarbeitet werden. Ebenso kann gegebenenfalls ein mittlerer Abstand mehrerer Datenpunkte zu dem oder den Centroiden bestimmt werden.

Basierend auf dem bestimmten Abstand oder den bestimmten Abständen wird dann die Bekanntheit der jeweiligen zu bewertenden Fahrstrecke angegeben bzw. bestimmt. Beispielsweise kann das Inverse des Abstands unmittelbar als Maß für die Bekanntheit verwendet werden, sodass bei größerem Abstand der geometrischen Eigenschaften also eine kleinere Bekanntheit, das heißt ein geringerer Bekanntheitsgrad, der zu bewertenden Fahrstrecke angegeben wird. Ebenso kann die Bekanntheit basierend auf dem bestimmten Abstand gemäß einer vorgegebenen Berechnungsvorschrift ermittelt werden.

Ebenso können, falls zu der zu bewertenden Fahrstrecke eine Vielzahl von geometrischen Eigenschaften vorliegt, die an einer Vielzahl von Messpunkten entlang der Fahrstrecke bestimmt wurden, so können diese in dem Eigenschaftsraum ihrerseits Cluster bilden. Diese sich für die jeweilige zu bewertende Fahrstrecke ergebenden Cluster können dann mit den Clustern der bekannten Fahrstrecken verglichen werden. Der Abstand der geometrischen Eigenschaften kann dann als beispielsweise als Ähnlichkeit, Übereinstimmungsgrad, Überlappung oder Centroidabstand des oder der Cluster der jeweiligen zu bewertenden Fahrstrecke und der Cluster der bekannten Fahrstrecken bestimmt werden oder gegeben sein.

Mit anderen Worten wird in dem vorliegenden Verfahren also basierend auf den geometrischen Eigenschaften ein Grad der Ähnlichkeit oder Übereinstimmung der zu bewertenden Fahrstrecke mit den bekannten Fahrstrecken ermittelt. Dies kann für die jeweilige Fahrstrecke insgesamt, für einzelne Abschnitte der Fahrstrecke oder für einzelne Punkte der Fahrstrecke durchgeführt werden.

Bekannte maschinelle Lernverfahren sowie datengetriebene Methoden ermöglichen basierend auf bereits bekannten Szenarien oder Situationen eine Abbildung mit der Möglichkeit einer Interpolation zwischen bekannten Szenarien oder Situationen. Entsprechend zwischen zwei oder mehreren bekannten Szenarien oder Situationen liegende neue Szenarien oder Situationen, die also eine gewisse Ähnlichkeit zu den benachbarten bekannten Szenarien oder Situationen aufweisen, können daher oftmals relativ sicher und zuverlässig gehandhabt werden. Eine Extrapolation auf neue Szenarien oder Situationen stellt jedoch oftmals ein Problem dar. Für derartige außerhalb der bekannten Szenarien oder Situationen liegende neue Szenarien oder Situationen müsste eine entsprechend gute Generalisierbarkeit oder Generalisierungsfähigkeit einer entsprechenden Methode, Anwendung oder Einrichtung gegeben sein, was jedoch oftmals anspruchsvoll und nur in begrenztem Maße erreichbar ist. Zudem kann beispielsweise im Anwendungsfall von Fahrstrecken oder Fahrmanövern nicht immer in offensichtlicher Weise erkannt oder unterschieden werden, wann es sich bei einer Anwendung auf eine neue Fahrstrecke oder ein neues Fahrmanöver um eine Interpolation bekannter Fahrstrecken oder Fahrmanöver handelt und wann tatsächlich extrapoliert wird bzw. werden müsste. Eine Metrik, welche die Bekanntheit bzw. Unbekanntheit einer neuen Fahrstrecke objektiv bewertet, kann daher in Kombination mit den bereits bekannten Fahrstrecken bzw. allgemein in Kombination mit den - beispielsweise aus einem Training - bekannten Daten eine verbesserte Einordnung von Ergebnissen ermöglichen, die sich bei einer Anwendung einer jeweiligen Methode, vorliegend also der Assistenzeinrichtung, auf die neue Fahrstrecke bzw. entsprechende neue Daten ergeben. Demgegenüber werden bisher oftmals subjektive Bewertungen durch menschliche Beobachter verwendet, was jedoch einen erhöhten Aufwand mit sich bringen kann, für eine Breitenanwendung gegebenenfalls nicht praktikabel umsetzbar ist sowie aufgrund des menschlichen räumlichen Verständnisses meist auf nur wenige Dimensionen beschränkt und daher weniger robust und aussagekräftig ist.

Um ein Mindestmaß an Sicherheit im praktischen Einsatz von Fahrassistenzeinrichtungen, die auf maschinellen Lernverfahren beruhen, sicherzustellen, können Fahrassistenzeinrichtungen zunächst getestet werden, beispielsweise in einem simulierten Fahrbetrieb. Eine solche Simulation wird jedoch in der Praxis typischerweise nicht sämtliche möglichen Fahrsituationen oder Fahrmanöver, die im praktischen Einsatz auftreten können, vorwegnehmen. Die Simulation stellt also praktisch immer nur eine Approximation der Realität dar und kann somit fehlerbehaftet sein. Um einen sicheren Einsatz einer Fahrassistenzeinrichtung zu ermöglichen bzw. ein damit verbundenes mögliches Risiko zuverlässig abschätzen zu können, gilt es also, einen Übertrag der Fahrassistenzeinrichtung von einer entsprechenden Simulation in die Realität sowie von bekannten Fahrstrecken oder Fahrmanövern auf unbekannte Fahrstrecken oder Fahrmanöver, auch als Generalisierbarkeit oder Generalisierungsfähigkeit bezeichnet, zu evaluieren. Dies wird durch die vorliegende Erfindung ermöglicht, da die erfindungsgemäß angegebene Bekanntheit einer Fahrstrecke als Grundlage für die Bewertung einer Performanz der Fahrassistenzeinrichtung, wenn diese mit der jeweiligen Fahrstrecke bzw. unbekannten Fahrstrecken konfrontiert wird, dienen kann. Die erfindungsgemäß angegebene Bekanntheit kann also als Konfidenzmaß zur Bewertung der Fahrstrecke bzw. eines entlang der Fahrstrecke ausgeführten Fahrmanövers für eine zumindest qualitative Einordnung dienen. Damit kann eine Güte oder Performanz bzw. die Generalisierbarkeit oder Generalisierungsfähigkeit des Fahrassistenzsystems und/oder einer zum Trainieren des Fahrassistenzsystem verwendeten Lernmethode bewertet werden. Dies kann dann wiederum als Grundlage für eine Beurteilung eines praktischen Einsatzes der Fahrassistenzeinrichtung dienen und somit letztlich zu einer verbesserten Sicherheit im Verkehrsgeschehen beitragen.

In einer möglichen Ausgestaltung der vorliegenden Erfindung umfassen die vorgegebenen geometrischen Parameter eine lokale Kurvenkrümmung, eine lokale Krümmungsrichtung in Fahrtrichtung eines Fahrzeugs beim Befahren der jeweiligen Fahrstrecke, eine lokale Fahrbahnbreite, einen lokalen Abstand einer Fahrzeugtrajektorie entlang der Fahrstrecke zu einem Fahrbahnrand, einen lokalen Abstand einer Fahrzeugtrajektorie entlang der Fahrstrecke zu einem Fahrstreifenrand, lokale räumliche Streckenkoordinaten entlang der Fahrstrecke, eine lokale Geschwindigkeit eines Fahrzeugs entlang der Fahrstrecke und/oder eine lokale Beschleunigung eines Fahrzeugs entlang der Fahrstrecke. Mit anderen Worten werden also einer, mehrere oder alle dieser Parameter vorgegeben, um den Eigenschaftsraum auszuspannen. Die geometrischen Eigenschaften der Fahrstrecken werden als Werte dieser Parameter angegeben bzw. bestimmt. Lokal bedeutet hier, dass die entsprechenden Parameterwerte, also die entsprechenden geometrischen Eigenschaften, an jeweils einem Messpunkt auf der jeweiligen Fahrstrecke ermittelt werden bzw. gelten. Entlang der jeweiligen Fahrstrecke kann dabei eine Vielzahl solcher Messpunkte liegen. Mit anderen Worten kann also für eine bestimmte Fahrstrecke beispielsweise die Krümmung in Fahrtrichtung für eine Vielzahl von Messpunkten entlang der Fahrstrecke angegeben werden, um die geometrischen Eigenschaften der Fahrstrecke festzulegen oder anzugeben. Durch die Verwendung der hier vorgeschlagenen Parameter können unterschiedlichste Fahrstrecken hinsichtlich ihrer geometrischen Eigenschaften robust charakterisiert werden.

In einer weiteren möglichen Ausgestaltung der vorliegenden Erfindung werden die geometrischen Eigenschaften in dem Eigenschaftsraum mittels einer Clusteranalyse gruppiert. Daraus resultierende Cluster, also Gruppen von Datenpunkten in dem Eigenschaftsraum, werden auf die Verlaufsdaten der jeweiligen zu bewertenden Fahrstrecke angewendet, um die jeweilige zu bewertende Fahrstrecke in zu den Clustern korrespondierende Streckenabschnitte aufzuteilen. Die Bekanntheit der zu bewertenden Fahrstrecke wird dann individuell für diese einzelnen Streckenabschnitte bestimmt. Schließt sich entlang der Fahrstrecke beispielsweise ein gerades Stück an eine Kurve an, so können die entlang oder in der Kurve bestimmten geometrischen Eigenschaften sich hinsichtlich einer Kurvenkrümmung in dem Eigenschaftsraum zu einem ersten Cluster gruppieren und die entlang oder auf dem geraden Stück ermittelten geometrischen Eigenschaften hinsichtlich der Krümmung sich in dem Eigenschaftsraum zu einem zweiten Cluster gruppieren. Beispielsweise anhand der räumlichen Streckenkoordinaten der zu einem Cluster gehörenden Datenpunkte oder geometrischen Eigenschaften können dann die korrespondierenden Streckenabschnitte der Fahrstrecke bestimmt werden. Die abschnittsweise Bewertung der Bekanntheit kann dementsprechend detailliertere Daten für die jeweilige Fahrstrecke liefern, also eine entsprechend genauere oder robustere Beurteilung der Bekanntheit der Fahrstrecke ermöglichen. Dies ermöglicht dann auch eine entsprechend genauere und robustere Bewertung der Performanz der Fahrassistenzeinrichtung.

Die zu bewertende Fahrstrecke kann also in mehrere Streckenabschnitte unterteilt werden, wobei für jeden Streckenabschnitt die diesem zugeordneten geometrischen Eigenschaften, also die diesem zugeordneten Datenpunkte in dem Eigenschaftsraum, basierend auf den Clustern der geometrischen Eigenschaften der bekannten Fahrstrecken analysiert werden. In Abhängigkeit davon wird für jeden Streckenabschnitt ein Übereinstimmungsgrad mit den bekannten Fahrstrecken ermittelt. Der Übereinstimmungsgrad kann dabei in Abhängigkeit von einer Zuordnungssicherheit ermittelt werden, welche angibt, mit welcher Sicherheit oder Konfidenz ein jeweiliger Datenpunkt einem bestimmten Cluster zugeordnet ist oder zugeordnet werden kann. Die Zuordnungssicherheit beschreibt mit anderen Worten also eine Fehlerwahrscheinlichkeit für die erfolgte Zuordnung zu einem bestimmten Cluster. Die Zuordnungssicherheit kann in Abhängigkeit von einem jeweiligen Abstand des jeweiligen Punkts zu dem Centroiden des entsprechenden Clusters und/oder in Abhängigkeit von einer Verteilung von dem Cluster zugeordneten Datenpunkte der bekannten Fahrstrecken bestimmt werden bzw. gegeben sein. Die Zuordnungssicherheit kann umso kleiner sein, je größer der Abstand ist bzw. je diffuser der jeweilige Cluster ist. Ebenso kann die Verteilung der dem jeweiligen Cluster zugeordneten bzw. den jeweiligen Cluster bildenden Datenpunkte anhand von deren mittlerem Abstand zum Centroiden des jeweiligen Clusters, einem maximalen Abstand eines Datenpunkte des jeweiligen Clusters zu dessen Centroiden und/oder eine ähnliche Metrik charakterisiert werden.

Die hier vorgeschlagene Verwendung der Clusteranalyse erlaubt eine objektive und robuste Gruppierung der geometrischen Eigenschaften. Damit ist eine objektive und robuste Grundlage für die Bewertung der Bekanntheit gegeben, was gerade bei längeren oder komplizierteren Fahrstrecken ein bedeutender Vorteil gegenüber einer manuellen oder subjektiven Klassifizierung oder Bekanntheitsbewertung sein kann. Dies ist der Fall, da sich herausgestellt hat, dass eine manuelle oder subjektive Klassifizierung von Fahrstrecken hinsichtlich ihrer geometrischen Ähnlichkeit nach Augenmaß oftmals keine objektiv nachvollziehbaren robusten Ergebnisse zur Beurteilung der tatsächlichen Bekanntheit der jeweiligen Fahrstrecke, also der geometrischen Ähnlichkeit zu einer oder mehreren anderen Fahrstrecken, und somit letztlich zur Beurteilung der Performanz oder Generalisierbarkeit der Fahrassistenzeinrichtung oder eines für diese verwendeten Lernverfahrens ermöglicht.

In einer weiteren möglichen Ausgestaltung der vorliegenden Erfindung werden die geometrischen Eigenschaften in dem Eigenschaftsraum mittels einer iterativen Clusteranalyse gruppiert. Dabei werden iterativ Cluster und deren Clusterschwerpunkte, also Centroide, unter der Maßgabe einer Minimierung der mittleren Abstände der geometrischen Eigenschaften, also der entsprechenden Datenpunkte in dem Eigenschaftsraum, zu den Clusterschwerpunkten bestimmt. Dabei können beispielsweise in oder nach einem Durchlauf oder Iterationsschritt stück- oder fahrstreckenweise neue geometrische Eigenschaften, also Daten, berücksichtigt werden, die dann also in Relation zu den bis dahin bereits bestimmten Clustern bzw. Clusterschwerpunkten gesetzt werden können. Auf diese Weise kann nach und nach eine Verfeinerung der Cluster bzw. eine verfeinerte Bestimmung der Clusterschwerpunkte erreicht werden. Dadurch kann letztlich eine Robustheit der Bestimmung der Bekanntheit der jeweiligen anhand der Cluster bzw. Clusterschwerpunkte zu bewertenden Fahrstrecke verbessert werden. Mit anderen Worten kann so also eine besonders zuverlässige Zuordnung der geometrischen Eigenschaften der bekannten Fahrstrecken zu entsprechenden Clustern erreicht werden.

In einer weiteren möglichen Ausgestaltung der vorliegenden Erfindung wird mittels der Fahrassistenzeinrichtung ein Fahrzeug zumindest teilweise autonom oder automatisiert entlang der jeweiligen zu bewertenden Fahrstrecke geführt. Eine dabei erreichte Performanz der Fahrassistenzeinrichtung wird dann mit der für diese Fahrstrecke bestimmten Bekanntheit kombiniert, also beispielsweise gewichtet, um die Generalisierbarkeit oder Generalisierungsfähigkeit der Fahrassistenzeinrichtung zu bestimmen oder zu beurteilen. Mit anderen Worten wird hier also bestimmt, wie gut die Fahrassistenzeinrichtung mit unbekannten, also neuen Fahrstrecken oder Situationen zurechtkommt. Die Bekanntheit der jeweiligen zu bewertenden Fahrstrecke für die Fahrassistenzeinrichtung kann also als Konfidenzmaß für die Fahrassistenzeinrichtung dienen bzw. verwendet werden. Aus der Bekanntheit bzw. dem Konfidenzmaß und der Performanz der Fahrassistenzeinrichtung entlang der zu bewertenden Fahrstrecke kann dann in vorgegebener Weise ein Maß zur Beurteilung eine Robustheit oder Zuverlässigkeit der Fahrassistenzeinrichtung bezüglich der automatisierten Fahrzeugführung auf unbekannten Strecken, also zur Beurteilung der Generalisierbarkeit oder Generalisierungsfähigkeit der Fahrassistenzeinrichtung, gebildet werden.

Die Performanz kann dabei für die gesamte zu bewertende Fahrstrecke insgesamt oder für individuell für die an anderer Stelle genannten, zu den Clustern korrespondierenden Streckenabschnitte oder für entsprechende oder individuelle Fahrmanöver des durch die Fahrassistenzeinrichtung geführten Fahrzeugs entlang der jeweiligen zu bewertenden Fahrstrecke bestimmt werden. Durch die hier vorgeschlagene Kombination der Bekanntheit und der erreichten Performanz kann berücksichtigt werden, dass auf einer zwar neuen aber den bekannten Fahrstrecken relativ ähnlichen Fahrstrecke grundsätzlich mit einer höheren Performanz der Fahrassistenzeinrichtung gerechnet werden kann als auf neuen Fahrstrecken, die eine geringere Bekanntheit aufweisen, sich also stärker von den der Fahrassistenzeinrichtung bereits bekannten Fahrstrecken unterscheiden. Eine solche höhere Performanz auf einer relativ bekannten neuen Fahrstrecke macht dementsprechend eine weniger belastbare oder aussagekräftige Angabe zur Generalisierbarkeit der Fahrassistenzeinrichtung. Dementsprechend kann die Performanz auf Fahrstrecken mit größerer Bekanntheit für die Beurteilung der Generalisierbarkeit relativ untergewichtet werden. Andererseits kann eine gegebenenfalls sogar relativ schlechte Performanz auf einer bestimmten Fahrstrecke dennoch für eine relativ gute Generalisierbarkeit der Fahrassistenzeinrichtung sprechen, wenn diese Fahrstrecke eine sehr geringe Bekanntheit für die Fahrassistenzeinrichtung aufweist. Dementsprechend kann die Performanz auf Fahrstrecken mit kleinerer Bekanntheit für die Beurteilung der Generalisierbarkeit relativ übergewichtet werden Durch die hier vorgeschlagene Ausgestaltung der vorliegenden Erfindung kann somit auf besonders robuste Weise die Generalisierbarkeit bzw. Generalisierungsfähigkeit der Fahrassistenzeinrichtung bestimmt werden.

In einer möglichen Weiterbildung der vorliegenden Erfindung werden die Performanzen der Fahrassistenzeinrichtung für mehrere zu bewertende Fahrstrecken bestimmt und zum Bestimmen der Generalisierungsfähigkeit der Fahrassistenzeinrichtung kombiniert. Dabei werden die Performanzen in Abhängigkeit von der bestimmten Bekanntheit der jeweiligen Fahrstrecke gewichtet. Die Performanzen der Fahrassistenzeinrichtung für eine Fahrstrecke mit geringerer Bekanntheit, also die Performanz der Fahrassistenzeinrichtung beim Führen des Fahrzeugs auf Fahrstrecken, deren geometrische Eigenschaften einen größeren Abstand zu den geometrischen Eigenschaften der bekannten Fahrstrecken aufweisen, wird dabei übergewichtet. Die Performanz für Fahrstrecken mit kleinerem Abstand, also größerer Bekanntheit und damit also größerer objektiver geometrischer Ähnlichkeit zu den bekannten Fahrstrecken wird hingegen untergewichtet. Durch die Bewertung der Generalisierungsfähigkeit auf Grundlage der Performanzen der Fahrassistenzeinrichtung auf mehreren zu bewertenden, also potenziell unbekannten, Fahrstrecken und die beschriebene Gewichtung wird eine noch genauere, robustere und zuverlässigere Bestimmung der Generalisierungsfähigkeit der Fahrassistenzeinrichtung ermöglicht. Dies kann insbesondere der größeren Datenbasis geschuldet sein, da mehrere Fahrstrecken eine größere Wahrscheinlichkeit dafür bieten, dass die Fahrassistenzeinrichtung mit tatsächlich unbekannten Merkmalen, geometrischen Eigenschaften oder Streckenverläufen konfrontiert wird.

In einer weiteren möglichen Ausgestaltung der vorliegenden Erfindung wird als die Fahrassistenzeinrichtung oder als Teil davon ein lernfähiges Modell, also eine Einrichtung des maschinellen Lernens, verwendet. Ein solches lernfähiges Modell kann beispielsweise mittels oder in Form eines künstlichen neuronalen Netzes realisiert werden. Falls die jeweils bestimmte Bekanntheit der jeweils zu bewertenden Fahrstrecke kleiner als ein vorgegebener Schwellenwert ist, wird dann automatisch eine vorgegebene Sicherheitsfunktion der Fahrassistenzeinrichtung oder eines Trainingsmechanismus zum Trainieren des lernfähigen Modells aktiviert. Durch eine solche Sicherheitsfunktion kann bei entsprechend großem Abstand bzw. entsprechend kleinem Bekanntheitsgrad beispielsweise automatisch ein entsprechender datengetriebener Lernansatz für Fahrstrecken oder Streckenabschnitte mit entsprechend geringerer Bekanntheit verstärkt oder intensiver überwacht werden. In einem Trainingsprozess können dann beispielsweise vermehrt entsprechende Fahrstrecken oder Streckenabschnitte als Trainingsdaten verwendet oder ein jeweiliges Ergebnis bzw. die jeweilige Fahrstrecke zur manuellen Überprüfung markiert werden. Im Betrieb eines mit der Fahrassistenzeinrichtung ausgestatteten Kraftfahrzeugs kann beispielsweise eine Navigationsroute bzw. eine Trajektorie entlang zumindest eines Abschnitts einer Navigationsroute automatisch für eine anstehende Fahrt des Kraftfahrzeugs bestimmt werden. Es kann dann in der beschriebenen Weise überprüft werden, ob bzw. in welchem Maße diese Navigationsroute bzw. die Trajektorie der Fahrassistenzeinrichtung bekannt ist. Ist die Bekanntheit kleiner als der vorgegebene Schwellenwert, kann die Sicherheitsfunktion automatisch aktiviert werden, um beispielsweise dennoch einen sicheren Betrieb des Kraftfahrzeugs entlang der Navigationsroute zu ermöglichen. Dazu können beispielsweise Betriebsparameter des Kraftfahrzeugs, wie etwa dessen maximale Geschwindigkeit, reduziert oder eingeschränkt werden, eine Eskalationsschwelle zum Einleiten vorgegebener, abgestuft stärker werdend in den Fahrbetrieb eingreifender Maßnahmen, herabgesetzt werden, zumindest stellenweise eine manuelle Fahrzeugsteuerung angefordert werden und/oder dergleichen mehr. Auch hierdurch kann basierend auf der erfindungsgemäß bestimmten Bekanntheit die Sicherheit im Betrieb der Fahrassistenzeinrichtung verbessert werden.

In einer weiteren möglichen Ausgestaltung der vorliegenden Erfindung wird als die Fahrassistenzeinrichtung oder als Teil davon ein lernfähiges Modell, also eine Einrichtung des maschinellen Lernens, verwendet und dieses anhand von als Trainingsdaten vorgegebenen Fahrstrecken mittels bestärkenden Lernens (englisch: reinforcement learning) trainiert. Mit anderen Worten kann hier also ein vorgegebener sogenannter in Reinforcement-Learning-Agent verwendet werden, um die Fahrassistenzeinrichtung, beispielsweise für die automatisierte Fahrzeugführung, zu trainieren. Die als Trainingsdaten vorgegebenen Fahrstrecken können beispielsweise die bekannten Fahrstrecken sein oder diese umfassen. Für das bestärkende Lernen kann eine Belohnungsfunktion vorgegeben sein, durch die beispielsweise eine Maximierung der Performanz der Fahrassistenzeinrichtung belohnt wird. Insbesondere kann das lernfähige Modell bzw. die Fahrassistenzeinrichtung hier mittels unüberwachten bestärkenden Lernens trainiert werden. Dies ist hier ohne weiteres möglich, da die erfindungsgemäß bestimmte Bekanntheit zu bewertender Fahrstrecken wie beschrieben eine robuste Möglichkeit oder Grundlage bietet, um die Generalisierungsfähigkeit der Fahrassistenzeinrichtung bzw. der verwendeten Trainingsmethode nachträglich oder zwischenzeitlich zu überprüfen. Somit kann durch die hier vorgeschlagene Ausgestaltung die Fahrassistenzeinrichtung besonders effektiv und effizient bereitgestellt werden, ohne eine verringerte Robustheit oder Sicherheit in Kauf zu nehmen.

In einer weiteren möglichen Ausgestaltung der vorliegenden Erfindung wird zum Angeben der Bekanntheit eine der jeweiligen zu bewertenden Fahrstrecke überlagerte Heatmap erzeugt. Mit anderen Worten kann also visualisiert werden, welche Bereiche oder Abschnitte der Fahrstrecke eine größere oder kleinere Bekanntheit aufweisen. Dies kann eine besonders einfache und intuitiv verständliche Angabe der Bekanntheit ermöglichen. Beispielsweise können dazu unterschiedliche Bereiche oder Abschnitte der Fahrstrecke in Abhängigkeit von der jeweils dafür bestimmten Bekanntheit unterschiedlich eingefärbt werden.

Ein weiterer Aspekt der vorliegenden Erfindung ist eine elektronische Recheneinrichtung, die dazu eingerichtet ist, insbesondere automatisch oder Teil automatisch, wenigstens eine Variante oder Ausführungsform des erfindungsgemäßen Verfahrens auszuführen. Dazu kann die elektronische Recheneinrichtung eine Eingangsschnittstelle zum Erfassen von Verlaufsdaten zu bewertende Fahrstrecken, einen computerlesbaren Datenspeicher und eine damit verbundene Prozessoreinrichtung, beispielsweise einen Mikrochip, einen Mikrocontroller oder einen Mikroprozessor, aufweisen. Die Recheneinrichtung kann auch eine Ausgangsschnittstelle zum Ausgeben entsprechender Verarbeitungsergebnisse aufweisen. In dem Datenspeicher kann ein Betriebs- oder Computerprogramm gespeichert sein, das die Verfahrensschritte oder Abläufe des erfindungsgemäßen Verfahrens repräsentiert, also codiert oder implementiert, und durch die Prozessoreinrichtung ausführbar ist, um das entsprechende Verfahren auszuführen oder dessen Ausführung zu veranlassen. Die erfindungsgemäße elektronische Recheneinrichtung kann insbesondere die im Zusammenhang mit dem erfindungsgemäßen Verfahren genannte elektronische Recheneinrichtung sein. Die erfindungsgemäße elektronische Recheneinrichtung kann Teil der erfindungsgemäßen Fahrassistenzeinrichtung oder eine von dieser separate Einrichtung sein.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Übersichtsdarstellung zur Veranschaulichung einer Anwendung eines geometrischen Clusterings auf eine Fahrstrecke; und
- Fig. 2: eine schematische Übersichtsdarstellung zur Veranschaulichung einer Bewertung einer Bekanntheit einer Fahrstrecke auf Basis des geometrischen Clusterings.

Gleiche oder funktionsgleiche Elemente sind in den Figuren mit den gleichen Bezugszeichen versehen.

Maschinelle Lernverfahren sowie datengetriebene Methoden ermöglichen basierend auf bereits gesehenen Szenarien oder Situation eine effiziente Abbildung mit der Möglichkeit der Interpolation zwischen bekannten Szenarien. Für viele Methoden stellt eine Extrapolation auf neue Szenarien, auch gefasst unter dem Begriff der Generalisierbarkeit der Methode, jedoch ein Problem dar. Im Bereich von Fahrmanövern ist es aber nicht immer trivial zu unterscheiden, wann es sich um eine Interpolation bereits bekannter Fahrmanöver oder Streckenabschnitte handelt und wann extrapoliert wird. Eine Metrik, welche die Bekanntheit, also die Neuheit einer neuen Strecke oder einzelner Streckenabschnitte aus Sicht beispielsweise einer Fahrassistenzeinrichtung zur Fahrzeugführung entlang der neuen Strecke bewertet, kann mit den Daten bereits bekannter Strecken zu einer besseren Einordnung von Ergebnissen der Fahrassistenzeinrichtung, also deren Performanz entlang der jeweils neuen Strecke führen.

Die Fahrassistenzeinrichtung kann beispielsweise mittels bestärkenden Lernens trainiert werden oder sein, in dem ein vorgegebener Agent seine Umgebung erkundet und anhand der beobachteten Szenarien, also der bekannten Strecken oder Fahrmanöver, eine optimierte Handlung, beispielsweise zum Führen des eines Fahrzeugs entlang einer Strecke, erlernt. Solche Handlungen oder Aktionen können beispielsweise eine Anpassung von Lenkwinkeln und Geschwindigkeiten bei der automatischen Fahrt, also Aktionen zur Quer- und Längsführung des Fahrzeugs sein oder umfassen. Da dies typischerweise datenineffizient ist, also eine Vielzahl an entsprechend präparierten Daten benötigt werden, um die Handlungen des Agenten zu optimieren, findet oftmals eine erste Auswertung bzw. ein Erlernen der Strecken oder Szenarien bzw. dafür geeigneter Handlungen auf Simulationsebene statt. Den Übertrag von einer solchen Simulation in die Realität sowie von dann bekannten Strecken oder Fahrmanövern auf unbekannte Strecken oder Fahrmanöver gilt es anschließend zu evaluieren. Hierbei ist eine Konfidenzbewertung bezüglich der Bekanntheit zur Bewertung von Handlungen, also letztlich der Performanz des Agenten als qualitative Einordnung nützlich, da somit die Güte des Agenten besser bewertet werden kann.

Bisherige Ansätze fokussieren sich oftmals darauf, entweder die Performanz des Agenten bzw. einer von diesem gelernten Strategie (englisch: Policy) für unbekannte Szenarien, hier also unbekannte Fahrstrecken oder Streckenabschnitte, zu evaluieren oder die Varianz einer jeweiligen Umgebung und daraufhin die Performanz einer vortrainierten Strategie zu untersuchen. Somit werden entweder Szenarien oder ein zugrundeliegendes Markow-Entscheidungsproblem variiert. Dabei besteht der Nachteil, dass lediglich das Ergebnis, also die Performanz des Agenten, betrachtet wird, jedoch keine Aussage getroffen wird, in welchem Verhältnis diese Performanz zum jeweiligen Szenario steht, wie diese Performanz also zu bewerten ist oder welche Aussagekraft diese Performanz besitzt. Besitzen neue, vermeintlich unbekannte Szenarien nur eine relativ geringe Abweichung von während eines Trainings des Agenten präsentierten Szenarien, so relativiert dies die Performanz des Agenten, also eine entsprechende Generalisierbarkeit. Bekannten Lösungen werden zudem oftmals in simulativen Frameworks eingesetzt und benötigen in der Realität zuerst experimentell ermittelte Daten. Zudem ist bei bisherigen Ansätzen oftmals eine Aussage über die Generalisierbarkeit erschwert, da entweder durch eine Verteilungsverschiebung im Zustandsraum die Performanz schlecht sein kann, da dann das zugrundeliegende Markow-Entscheidungsproblem verändert ist, oder durch die Abdeckung des Zustandsraums im Allgemeinen.

Nachfolgend wird hingegen ein Verfahren beschrieben, das a priori bereits eine Bewertung eines Zustandsraums, also etwa gegebener geometrische Daten oder Eigenschaften einer neuen Fahrstrecke, vornehmen kann, was unter Umständen direkt in einer experimentellen Ermittlung entsprechender Daten mitangewendet werden kann.

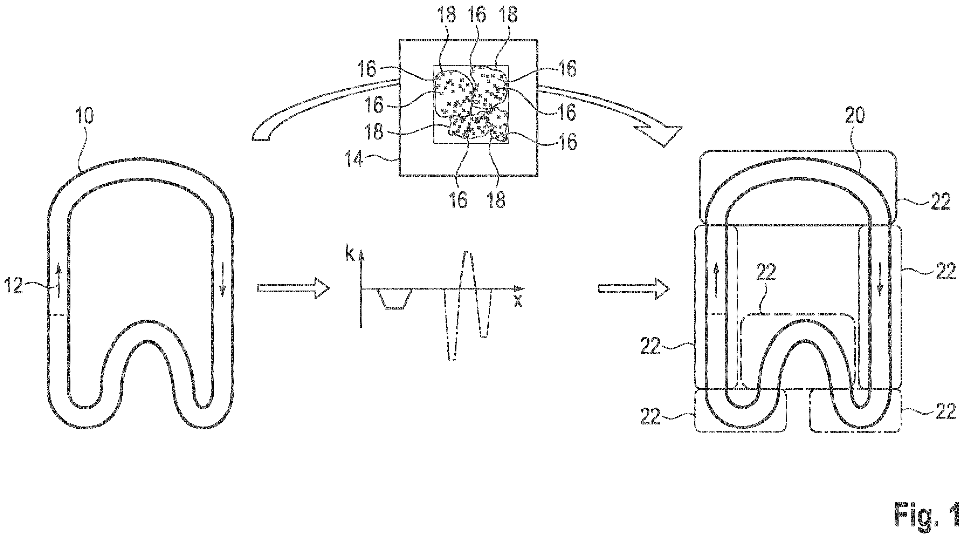

Dazu zeigt Fig. 1 eine schematische Übersichtsdarstellung, in der unter anderem eine Trainingsstrecke 10 schematisch dargestellt ist. Diese Trainingsstrecke 10 kann von einem Kraftfahrzeug in einer bestimmten Trainingsfahrtrichtung 12 befahren werden. Dabei werden entlang der Trainingsstrecke 10 an einer Vielzahl von Messpunkten Streckendaten 14 der Trainingsstrecke 10 erfasst, die geometrische Eigenschaften als Werte vorgegebener geometrische Parameter angeben. Die Trainingsstrecke 10 kann hier stellvertretend für eine Vielzahl von weiteren Fahrstrecken stehen, die wie die Trainingsstrecke 10 zum Trainieren einer Fahrassistenzeinrichtung bzw. eines lernfähigen Modells einer Fahrassistenzeinrichtung, beispielsweise zur automatisierten Fahrzeugführung, verwendet werden können.

Die Streckendaten 14 sind hier schematisch repräsentiert durch an den einzelnen Messpunkten entlang der Trainingsstrecke 10 aufgenommene Geometriewerte 16, von denen der Übersichtlichkeit halber hier nur einige explizit gekennzeichnet sind. Die Geometriewerte 16 sind dabei in einen hier ebenfalls nur schematisch angedeuteten, durch die vorgegebenen geometrischen Parameter aufgespannten Eigenschaftsraum eingetragen. Auf die Streckendaten 14 bzw. die Geometriewerte 16 wird dann eine Clusteringmethode angewendet, wodurch Cluster 18 basierend auf der Geometrie der beiliegenden Trainingsstrecke 10 gebildet werden.

Zur weiteren Veranschaulichung der geometrischen Eigenschaften der Trainingsstrecke 10 ist hier zentral diagrammatisch eine Kurvenkrümmung K über einer Streckenkoordinate oder Streckenposition X, welche eine aktuelle Position entlang der Trainingsstrecke 10 in der Trainingsfahrtrichtung 12 angibt, aufgetragen. Dabei ist erkennbar, dass es entlang der Trainingsstrecke 10 einige gerade, also krümmungsfreie Abschnitte gibt, die durch Kurven mit unterschiedlichen Kurvenkrümmungen K verbunden sind. Die entsprechenden Kurven sind hier durch Ausschläge von der X-Achse repräsentiert. Ausschläge in positive und negative K-Richtung repräsentieren dabei unterschiedliche Krümmungsrichtungen, also Links- bzw. Rechtskurven. Diese Ausschläge bzw. die dazwischenliegenden geraden Abschnitte entsprechen oder korrespondieren zu den Clustern 18.

Die Cluster 18 können mittels einer, gegebenenfalls iterativen, Clusteranalyse bestimmt werden. Dabei kann beispielsweise ein mehrfaches Clustering durchgeführt werden, um einen Mittelwert von Abständen der einzelnen Geometriewerte 16 jeweils eines der Cluster 18 zu Centroiden, also einem geometrischen Schwerpunkt, des jeweiligen Clusters 18 zu minimieren.

Die so letztlich ermittelten Cluster 18 können dann auf die Trainingsstrecke 10 angewendet werden. Dadurch ergibt sich eine entsprechende segmentierte Trainingsstrecke, die gemäß der Cluster 18 bzw. der durch diese repräsentierten geometrischen Eigenschaften in mehrere Trainingsstreckenabschnitte 22 aufgeteilt ist. Dabei werden also Bereiche der Trainingsstrecke 10, die bestimmte einheitliche o. ä. geometrische Eigenschaften aufweisen, jeweils mit den Clustern 18 abgeglichen und einem der Cluster 18 zugeordnet, der entsprechende geometrische Eigenschaften repräsentiert. Die Cluster 18 entsprechenden nach Abschluss des Trainings bekannten Streckenabschnitten. Diese können beispielsweise durch die jeweilige Fahrassistenzeinrichtung mit bekannter Performanz bewältigt werden.

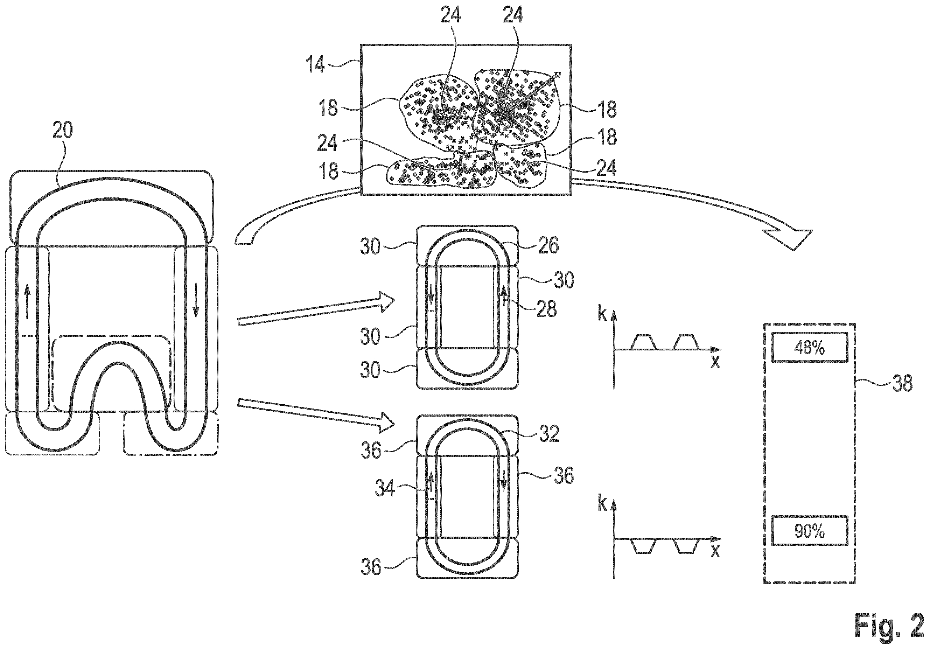

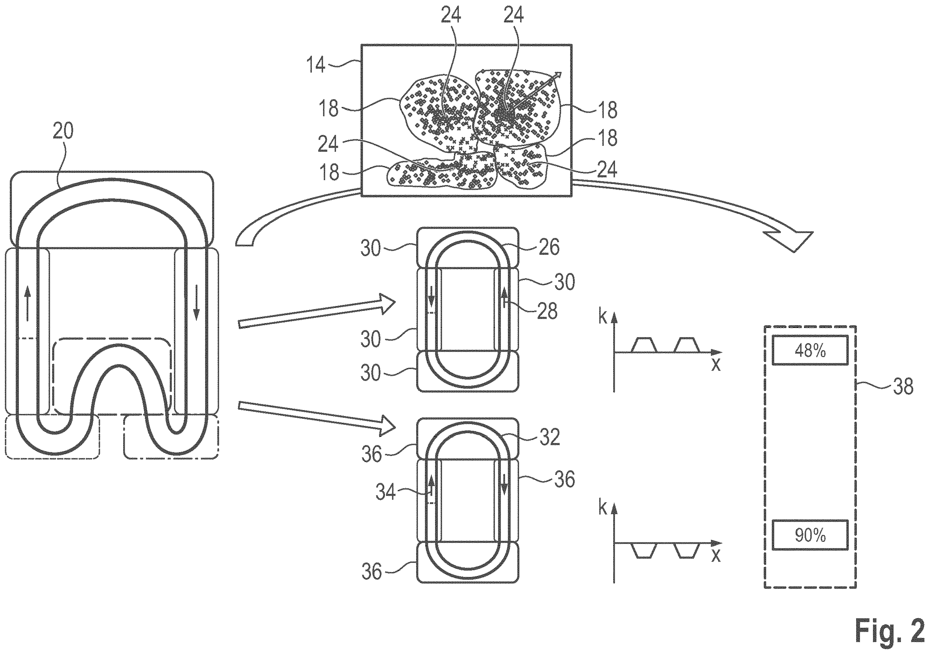

Fig. 2 zeigt eine schematische Übersichtsdarstellung einer Anwendung auf eine neue, potenziell ganz oder teilweise unbekannte Fahrstrecke. Beispielhaft sind hier eine erste Evaluierungsstrecke 26 und eine zweite Evaluierungsstrecke 32 vorgegeben, die hinsichtlich ihrer Bekanntheit relativ zu der wenigstens einen bekannten Trainingsstrecke 10 automatisch bewertet werden sollen. Die erste Evaluierungsstrecke 26 kann durch Anwendung der Cluster 18 in erste Streckenabschnitte 30 aufgeteilt werden. Ebenso kann die zweite Evaluierungsstrecke 32 durch Anwendung der Cluster 18 in zweite Streckenabschnitte 36 aufgeteilt werden. Vorliegend unterscheiden sich die erste Evaluierungsstrecke 26 und die zweite Evaluierungsstrecke 32 beispielhaft dadurch, dass eine für die erste Evaluierungsstrecke 26 vorgesehene erste Fahrtrichtung 28 entgegengesetzt zu einer für die zweite Evaluierungsstrecke 32 vorgesehenen zweiten Fahrtrichtung 34 verläuft. Mit anderen Worten werden oder wurden die erste Evaluierungsstrecke 26 und die zweite Evaluierungsstrecke 32 also in entgegengesetzte Richtungen durchfahren.

Wie für die Trainingsstrecke 10 beschrieben, können dabei geometrische Daten der Evaluierungsstrecken 26, 32 erfasst werden, die dann in den durch die vorgegebenen geometrischen Parameter aufgespannten Eigenschaftsraum eingetragen werden können. Diese geometrischen Eigenschaften der Evaluierungsstrecken 26, 32 werden dann jeweils basierend auf den ermittelten Clustern 18 bewertet, um zu detektieren, ob die jeweilige Evaluierungsstrecke 26, 32 bereits bekannte Streckenabschnitte, also Bereiche bereits bekannter und durch die Cluster 18 repräsentierter Geometrie, umfasst. Die punktuell oder abschnittsweise entlang der Evaluierungsstrecke 26, 32 ermittelten geometrischen Eigenschaften können also jeweils einem der Cluster 18 zugeordnet werden. Dazu kann beispielsweise ein Abstand zu den Centroiden, also Clusterschwerpunkten 24 der Cluster 18 ermittelt werden, wobei die Zuordnung dann zu demjenigen Cluster 18 erfolgen kann, zu dessen Clusterschwerpunkt 24 der kleinste Abstand in dem Eigenschaftsraum gegeben ist. Wird also eine neue Fahrstrecke befahren, können über den Abstand der geometrischen Eigenschaften von deren Streckenelementen zu den Clusterschwerpunkten 24 eine Aussage über die Bekanntheit bzw. Neuheit eines jeweiligen Streckenelements getroffen werden.

Eine Sicherheit oder Zuverlässigkeit bzw. eine Fehlerwahrscheinlichkeit der Zuordnung bestimmter geometrische Eigenschaften bzw. Messpunkte oder Streckenabschnitte zu einem der Cluster 18 kann dabei mit zunehmendem Abstand von dem jeweiligen Clusterschwerpunkte 24 zunehmen. Somit ergibt sich also ein gewisses Konfidenzmaß 38, das die Bekanntheit der jeweiligen neuen Strecke, hier also der Evaluierungsstrecken 26, 32, im Kontext oder relativ zu der wenigstens einen bekannten Trainingsstrecke 10 bzw. deren geometrischen Eigenschaften angibt.

Im vorliegenden Beispiel umfassen die ersten Streckenabschnitte 30 der ersten Evaluierungsstrecke 26 zwei gerade, also krümmungsfreie Streckenabschnitte, für die eine Übereinstimmung mit einem der Cluster 18 gefunden werden kann, da auch die Trainingsstrecke 10 entsprechende gerade Trainingsstreckenabschnitte 22 umfasst. Die erste Evaluierungsstrecke 26 umfasst jedoch auch erste Streckenabschnitte 30, die einer Linkskurve mit relativ geringer Kurvenkrümmung K entsprechen, wofür es in der Trainingsstrecke 10 keine exakte Entsprechung gibt. Dementsprechend ist also die erste Evaluierungsstrecke 26 als teilweise bekannt einzustufen, sodass anhand der entsprechend relativ niedrigen Übereinstimmung mit den Clustern 18 bzw. einem relativ großen Abstand zu deren Clusterschwerpunkten 24 als das Konfidenzmaß 38 beispielsweise einen Bekanntheitsgrad von 48 % für die erste Evaluierungsstrecke 26 ergeben kann.

Demgegenüber umfasst die zweite Evaluierungsstrecke 32 neben den geraden, krümmungsfreien Abschnitten zweite Streckenabschnitte 36, die aufgrund der entgegengesetzten zweiten Fahrtrichtung 34 eine Rechtskurve mit relativ geringer Kurvenkrümmung K repräsentieren. Für diese gibt es in der Trainingsstrecke 10 eine zumindest teilweise Übereinstimmung, da auch die Trainingstrecke 10 in der Trainingsfahrtrichtung 12 eine solche Rechtskurve umfasst, wenn auch mit etwas anderer Kurvenkrümmung K. Damit kann für sämtliche der zweiten Streckenabschnitte 36 der zweiten Evaluierungsstrecke 32 ein entsprechend geringerer Abstand zu jeweils einem der Clusterschwerpunkte 24 ermittelt werden. Da die zweite Evaluierungsstrecke 32 hinsichtlich ihrer Geometrie jedoch nicht exakt der segmentierten Trainingsstrecke 20 bzw. deren Trainingsstreckenabschnitten 22 entspricht, wird hier keine 100-prozentige Übereinstimmung ermittelt, sondern beispielsweise ein Bekanntheitsgrad von 90 % als das Konfidenzmaß 38 für die zweite Evaluierungsstrecke 32.

Die durch das Konfidenzmaß 38 gelieferte Aussage über die Bekanntheit ermöglicht beispielsweise die Nutzung entsprechender Informationen für Sicherheitsfunktionen, welche einen datengetriebenen Ansatz für Streckenabschnitte geringerer Bekanntheit überwachen können, sowie eine besonders aussagekräftige Beurteilung, wie beispielsweise ein zum Trainieren der jeweiligen Fahrassistenzeinrichtung verwendeter maschineller Lernansatz, insbesondere Reinforcement-Learning-Agent, auf unbekannten Strecken agieren bzw. performen wird.

Je höher das Konfidenzmaß 38 ist, je genauer, eindeutiger oder zuverlässiger also die geometrischen Eigenschaften bzw. die entsprechenden Datenpunkte in dem Eigenschaftsraum der jeweiligen bewerteten oder zu bewertenden Fahrstrecke jeweils einem der Cluster 18 zugeordnet werden können, desto wahrscheinlicher ist es, dass die Fahrstrecke bzw. ein jeweiliger Streckenabschnitt bekannt ist.

Das Konfidenzmaß 38, also die Bekanntheit der entsprechenden Streckenabschnitte oder Fahrstrecken insgesamt, kann dann in eine Beurteilung einer Generalisierbarkeit oder Generalisierungsfähigkeit der jeweiligen Fahrassistenzeinrichtung bzw. einer zu deren Training verwendeten Trainingsmethode oder Trainingseinrichtung, beispielsweise des Reinforcement-Learning-Agenten, einfließen. Dazu wird die Performanz der Fahrassistenzeinrichtung nach Abschluss von deren Training auf verschiedenen Teststrecken, hier also beispielsweise anhand der Evaluierungsstrecken 26, 32, untersucht. Um eine Aussage über die Anpassung auf neue Umgebungen, also Fahrstrecken oder Streckenabschnitte, treffen zu können, wird deren Streckengeometrie beispielsweise in einem unüberwachten Lernansatz mittels des erläuterten geometrischen Clusterings objektiv beschrieben. Dabei werden Unterschiede zwischen der Streckengeometrie in einem Trainingsdatensatz - hier also beispielsweise der Trainingsstrecke 10 - sowie im jeweiligen Testdatensatz - hier also beispielsweise den Evaluierungsstrecken 26 - 32, aufgezeigt. Unterscheiden sich die Streckengeometrien signifikant voneinander, so kann dies in Form eines entsprechend geringen Konfidenzmaßes 38 als Gewichtung zur Beurteilung der Fahrassistenzeinrichtung in unbekannten Fahrmanövern bzw. entlang unbekannter Fahrstrecken genutzt werden. Bei relativ geringen Unterschieden der Streckengeometrien, also relativ großer Bekanntheit bzw. relativ großem Konfidenzmaß 38, kann die Beurteilung der Generalisierbarkeit hingegen abgeschwächt werden. Zur Bewertung der Generalisierbarkeit kann also die auf einer neuen Fahrstrecke ermittelte Performanz der Fahrassistenzeinrichtung sowie das für diese Fahrstrecke ermittelte Konfidenzmaß 38, beispielsweise durch eine vorgegebene Kombination oder Gewichtung, berücksichtigt werden. Dies kann in einem Zwischenschritt während des Trainings zum Evaluieren eines Trainingsfortschrittes der Fahrassistenzeinrichtung ebenso wie nach Abschluss des Trainings, also zur Inferenzzeit, durchgeführt werden.

Die hier beschriebenen Verfahren ermöglichen eine objektivere Beurteilung der Performanz eines datengetriebene Lernansatzes in neuen Umgebungen, also bei der Verarbeitung neuer Daten, die beispielsweise während eines Trainings nicht verwendet wurden, als dies mit herkömmlichen Ansätzen möglich ist. Eine solche Objektivierung kann dabei durch Heranziehen des geometrischen Clusterings als Bewertungsmetrik bzw. als Grundlage für das Bestimmen der Bekanntheit als Bewertungsmetrik automatisiert erfolgen. Somit wird eine besonders schnelle Erprobung oder Überprüfung einer Robustheit einer entsprechenden Algorithmik durch besonders einfache Detektion von bisher nicht berücksichtigten, also unbekannten Fahrmanövern oder Streckenabschnitten ermöglicht. Bisherige Ansätze, bei denen beispielsweise subjektiv eine Teststrecke mit der wenigstens einen Trainingsstrecke 10 rein visuell verglichen wird, kann in der Praxis nur von bedingter Aussagekraft bezüglich der Fähigkeit zur Generalisierung der jeweiligen Algorithmen sein, da nicht ermittelt wird, wie stark oder in welchem Maße sich die Fahrstrecken objektiv voneinander unterscheiden. Somit ist bei derartigen Ansätzen ein relativ großes Maß an Expertenwissen sowie manuellem Arbeitsaufwand notwendig, was auch mit entsprechenden Kosten verknüpft ist. Dies kann durch das vorliegend beschriebene Verfahren eingespart werden, wobei dieses auch keinerlei Beschränkung hinsichtlich einer möglichen geometrischen Komplexität oder Kompliziertheit zu bewertender Fahrstrecken unterliegt.

Insgesamt zeigen die beschriebenen Beispiele wie ein geometrisches Clustering als Maß für eine Konfidenz für eine Bewertung der Generalisierbarkeit eines lernfähigen Modells, beispielsweise eines Reinforcement-Learning-Agenten für adaptive Regelstrategien automatischer Fahrfunktionen, verwendet werden kann, um letztlich einen besonders sicheren Einsatz einer entsprechenden Fahrassistenzeinrichtung, also einen besonders sicheren automatischen Fahrbetrieb eines Kraftfahrzeugs zu ermöglichen.

### Bezugszeichenliste

- 10: Trainingsstrecke
- 12: Trainingsfahrtrichtung
- 14: Streckendaten
- 16: Geometriewerte
- 18: Cluster
- 20: segmentierte Trainingsstrecke
- 22: Trainingsstreckenabschnitte
- 24: Clusterschwerpunkte
- 26: erste Evaluierungsstrecke
- 28: erste Fahrtrichtung
- 30: erste Streckenabschnitte
- 32: zweite Evaluierungsstrecke
- 34: zweite Fahrtrichtung
- 36: zweite Streckenabschnitte
- 38: Konfidenzmaß
- K: Kurvenkrümmung
- X: Streckenposition

## Patentansprüche

1. Verfahren zum Bewerten einer Bekanntheit einer Fahrstrecke (26, 32) für eine Fahrassistenzeinrichtung, in dem mittels einer elektronischen Recheneinrichtung
- Streckendaten (14) bereitgestellt werden, die geometrische Eigenschaften (16) wenigstens einer der Fahrassistenzeinrichtung bekannten (10) Fahrstrecke angeben und gemäß der geometrischen Eigenschaften (16) in einem durch entsprechende vorgegebene geometrische Parameter aufgespannten Eigenschaftsraum gruppiert sind,
- für die jeweilige zu bewertende Fahrstrecke (26, 32) Verlaufsdaten erfasst werden, die zumindest einen Verlauf der Fahrstrecke (26, 32) angeben, und geometrische Eigenschaften analog zu den Streckendaten (14) der wenigstens einen bekannten Fahrstrecke (10) bestimmt werden,
- ein Abstand der geometrischen Eigenschaften der jeweiligen zu bewertenden Fahrstrecke (26, 32) zu den geometrischen Eigenschaften (16, 18, 24) der wenigstens einen bekannten Fahrstrecke (10) in dem aufgespannten Eigenschaftsraum bestimmt wird und darauf basierend die Bekanntheit (38) der jeweiligen zu bewertenden Fahrstrecke (26, 32) angegeben wird.

2. Verfahren nach Anspruch 1,
**dadurch gekennzeichnet, dass**
die vorgegebenen geometrischen Parameter eine lokale Kurvenkrümmung (K), eine lokale Krümmungsrichtung (K) in Fahrtrichtung (12, 28, 34), eine lokale Fahrbahnbreite, einen lokalen Abstand einer Fahrzeugtrajektorie entlang der Fahrstrecke (10, 26, 32) zu einem Fahrbahnrand, einen lokalen Abstand einer Fahrzeugtrajektorie entlang der Fahrstrecke (10, 26, 32) zu einem Fahrstreifenrand, lokale räumliche Streckenkoordinaten (X) entlang der Fahrstrecke (10, 26, 32), eine lokale Geschwindigkeit eines Fahrzeugs entlang der Fahrstrecke (10, 26, 32) und/oder eine lokale Beschleunigung eines Fahrzeugs entlang der Fahrstrecke (10, 26, 32) umfassen.

3. Verfahren nach einem der vorhergehenden Ansprüche,
**dadurch gekennzeichnet, dass**
die geometrischen Eigenschaften (16) in dem Eigenschaftsraum mittels einer Clusteranalyse gruppiert werden, daraus resultierende Cluster (18) auf die Verlaufsdaten angewendet werden, um die jeweilige zu bewertende Fahrstrecke (26, 32) in zu den Clustern (18) korrespondierende Streckenabschnitte (30, 36) aufzuteilen, und die Bekanntheit individuell für die einzelnen Streckenabschnitte (30, 36) bestimmt wird.

4. Verfahren nach einem der vorhergehenden Ansprüche,
**dadurch gekennzeichnet, dass**
die geometrischen Eigenschaften (16) in dem Eigenschaftsraum mittels einer iterativen Clusteranalyse gruppiert werden, in der iterativ Cluster (18) und deren Clusterschwerpunkte (24) unter der Maßgabe einer Minimierung der mittleren Abstände zu den Clusterschwerpunkten (24) bestimmt werden.

5. Verfahren nach einem der vorhergehenden Ansprüche,
**dadurch gekennzeichnet, dass**
mittels der Fahrassistenzeinrichtung ein Fahrzeug entlang der jeweiligen zu bewertenden Fahrstrecke (26, 32) geführt wird und eine dabei erreichte Performanz der Fahrassistenzeinrichtung mit der bestimmten Bekanntheit der zu bewertenden Fahrstrecke (26, 32) kombiniert wird, um die Generalisierungsfähigkeit der Fahrassistenzeinrichtung zu bestimmen.

6. Verfahren nach Anspruch 5,
**dadurch gekennzeichnet, dass**
die Performanzen der Fahrassistenzeinrichtung für mehrere zu bewertende Fahrstrecken (26, 32) bestimmt und zum Bestimmen der Generalisierungsfähigkeit der Fahrassistenzeinrichtung kombiniert werden, wobei die Performanzen in Abhängigkeit von der bestimmten Bekanntheit der jeweiligen Fahrstrecke (26, 32) gewichtet werden.

7. Verfahren nach einem der vorhergehenden Ansprüche,
**dadurch gekennzeichnet, dass**
die Fahrassistenzeinrichtung ein lernfähiges Modell umfasst und falls die jeweils bestimmte Bekanntheit (38) kleiner als ein vorgegebener Schwellenwert ist, automatisch eine vorgegebene Sicherheitsfunktion der Fahrassistenzeinrichtung oder eines Trainingsmechanismus zum Trainieren des lernfähigen Modells aktiviert wird.

8. Verfahren nach einem der vorhergehenden Ansprüche,
**dadurch gekennzeichnet, dass**
zumindest als Teil der Fahrassistenzeinrichtung ein lernfähiges Modell verwendet wird und dieses anhand von als Trainingsdaten vorgegebenen Fahrstrecken (10) mittels bestärkenden Lernens trainiert wird.

9. Verfahren nach einem der vorhergehenden Ansprüche,
**dadurch gekennzeichnet, dass**
zum Angeben der Bekanntheit eine der jeweiligen zu bewertenden Fahrstrecke (26, 32) überlagerte Heatmap erzeugt wird.

10. Elektronische Recheneinrichtung, die dazu eingerichtet ist, ein Verfahren nach einem der Ansprüche 1 bis 9 durchzuführen.
